(19) Europäisches Patentamt
European Patent Office
Office européen des brevets

(11) **EP 2 504 963 B1**

(12) **FASCICULE DE BREVET EUROPEEN**

(45) Date de publication et mention de la délivrance du brevet:
**23.10.2013   Bulletin 2013/43**

(51) Int Cl.:
**H04L 27/18** (2006.01)   **H04L 27/20** (2006.01)
**H04L 27/22** (2006.01)

(21) Numéro de dépôt: **10779811.8**

(22) Date de dépôt: **18.11.2010**

(86) Numéro de dépôt international:
**PCT/EP2010/067755**

(87) Numéro de publication internationale:
**WO 2011/061255 (26.05.2011 Gazette 2011/21)**

(54) **SYSTEME ET PROCEDE D'EMISSION RECEPTION D'UN SIGNAL NUMERIQUE SUR VOIE RADIO**

SYSTEM UND VERFAHREN ZUM SENDEN UND ZUM EMPFANGEN EINES DIGITALEN FUNKSIGNALS

SYSTEM AND METHOD FOR TRANSMITTING AND RECEIVING A DIGITAL RADIO SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **20.11.2009   FR 0905591**

(43) Date de publication de la demande:
**03.10.2012   Bulletin 2012/40**

(73) Titulaire: **Thales**
**92200 Neuilly Sur Seine (FR)**

(72) Inventeur: **LAURENT, Pierre-André**
**F-92700 Colombes (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A1- 2005 286 653     US-A1- 2007 002 986**

**Description**

L'invention concerne un procédé d'émission-réception d'un signal numérique sur voie radio, ledit signal numérique comprenant une information modulée avec une modulation à amplitude constante ou quasi-constante et le système permettant sa mise en oeuvre.

Elle est notamment utilisée dans le domaine des télécommunications numériques sur voie radio, lorsque l'on souhaite augmenter le rendement de l'émetteur en le faisant fonctionner partiellement ou totalement à saturation.

Elle s'applique notamment pour des modulations à phase continue ou CPM (abréviation anglo-saxonne de Continuous Phase Modulation). Elle trouve son utilisation dans les systèmes de téléphonie mobile GSM utilisant une modulation GMSK abréviation anglo-saxonne de « Gaussian Minimum Shift Keying ».

De manière plus générale, elle peut être utilisée pour toutes les modulations présentant une amplitude constante ou quasi-constante.

Dans la suite de la description, le Demandeur utilisera les définitions suivantes :

- le terme « état » d'un symbole est utilisé pour désigner la représentation dans le plan complexe dudit symbole.
- le terme «constellation » d'une séquence de symboles complexe est utilisé pour désigner la représentation desdits symboles dans le plan complexe.

Le terme $h_e(a(n), t)$ est la réponse impulsionnelle d'un filtre dont l'entrée est a(n) $\delta(t - n\,T)$ et est l'impulsion de fréquence associée au symbole a(n).

Dans certains systèmes de télécommunications actuels, l'utilisation de modulations à amplitude constante, par exemple des modulations de phase ou de fréquence, est préférée car ces dernières permettent de maximiser la  portée desdits systèmes. En effet, la puissance d'émission est constante et maximale dans ce cas.

Dans le cas d'une modulation à phase continue, deux avantages sont connus:

• Une occupation spectrale raisonnable, qui conduit à une interférence réduite entre canaux de transmission adjacents,
• Une amplitude constante qui permet d'utiliser les amplificateurs de sortie des émetteurs au maximum de leur puissance, sans trop se soucier de leur linéarité en amplitude. Ceci permet d'optimiser le bilan de liaison, à puissance moyenne d'émission donnée.

Parmi ces modulations, l'une des plus utilisées, en particulier dans la radio-téléphonie mobile, est la modulation GMSK. Cette dernière a été retenue en raison de son spectre en fréquence qui présente une décroissance maximale en fonction de l'écart par rapport à la fréquence porteuse. C'est une modulation binaire (donc à deux états), et de type différentiel en ce sens que lorsque deux bits successifs à transmettre sont différents (0/1 ou 1/0) la porteuse subit une rotation de phase totale de $+\pi/2$ et de $-\pi/2$ dans le cas contraire.

Les modulations CPM sont en pratique complètement définies par une impulsion de fréquence et par l'indice de modulation h tel que la moyenne de la valeur absolue de la rotation de phase vaut h $\pi$. La plupart du temps, et pour des raisons de simplicité de mise en oeuvre du récepteur, h vaut 1/2.

Par contre, la durée de l'impulsion de fréquence associée à un bit donné n'est pas limitée à la durée d'un bit. Ainsi, pour la modulation GMSK évoquée précédemment, elle devrait être infinie puisque, par définition, la courbe Gaussienne est de longueur infinie. En pratique, on se limite à une durée finie (2 ou 3 bits) telle que la dégradation des performances par rapport au cas théorique soit négligeable.

Tant que l'on se limite au cas binaire, le récepteur reste relativement simple.

Une théorie élaborée dans le milieu des années 1980 exposée dans la publication "Exact and Approximate Construction of Digital Phase Modulations by Superposition of Amplitude Modulated Pulses (AMP)", Pierre.A. Laurent, IEEE Transactions on Communications, Vol. COM-34, No 2, February 1986, pp 150-160, a montré que ce type de modulations pouvait être approximé par une modulation d'amplitude et de phase classique et donc être démodulée par un récepteur de faible complexité. Ceci n'est vrai que dans le cas binaire (1 bit par symbole).

A l'heure actuelle, les besoins en termes de débit utile ont fortement augmenté, si bien que l'on cherche à généraliser les modulations CPM à plus de deux états : quatre états permettent de véhiculer non pas un bit par symbole mais deux, huit états 3 bits et 16 états 4 bits.

Malheureusement, même dans le cas à 4 états, le récepteur devient beaucoup plus complexe que dans le cas à deux états car l'interférence entre symboles inhérente à ce genre de modulation complique considérablement le problème : le signal reçu pour un symbole donné dépend de son état ainsi que de ceux de ses voisins et le nombre de configurations devient si important que l'on ne peut décider de façon simple de la valeur du dit symbole.

Qui plus est, l'augmentation de débit passe aussi par l'augmentation de la vitesse de modulation et donc par l'apparition de problèmes dus à la propagation : il se peut qu'à un instant donné on reçoive le signal en vue directe de l'émetteur, mais aussi une ou plusieurs répliques retardées (réflexions sur des bâtiments etc) ayant des retards non négligeables par rapport à la durée d'un symbole, voire nettement supérieurs. Ceci complexifie encore plus le récepteur.

A la connaissance du Demandeur, dans le cas d'une modulation à amplitude constante ou quasi-constante, il n'existe pas de système d'émission-réception, de conception simple, dès que le nombre d'états envisagés est supérieur à 2.

L'enseignement technique du brevet US 2005/286653 concerne un modulateur capable de supporter des formes diverses de modulation, de type GMSK, 8SPK. L'enseignement technique de ce document repose sur l'utilisation d'un ensemble de filtres adaptés pour chaque forme de pulse dans un ensemble. Pour générer la forme d'onde pour un schéma de modulation souhaitée, un ou plusieurs filtres sont activés alors que les autres ne sont pas actifs. Les sorties des filtres sont ensuite sommées pour générer la sortie du modulateur utilisée pour la modulation.

L'invention concerne un procédé de modulation à amplitude constante et phase continue de données numériques et de démodulation dudit signal modulé, lesdites données se présentant sous la forme de symboles pouvant prendre un nombre M d'états supérieur à 2, caractérisé en ce qu'il comporte en combinaison au moins les étapes suivantes :

- récupérer les symboles $a(n)$ de données numériques à transmettre, se présentant avec un intervalle temporel T constant,
- associer à chaque symbole $a(n)$ une impulsion de fréquence notée $h_e(a(n))$, impulsion de fréquence de longueur L T, avec L entier supérieur ou égal à 1, et dont la forme dépend explicitement de la valeur de $a(n)$,

pondérer l'impulsion de fréquence $h_e(a(n), t)$ par la variation de phase totale associée à $a(n)$, cette variation de phase totale étant de la forme $\pi(2a(n) - (M-1))/M$ avec $a(n) = 0, 1, ..., M-1$, et pour un symbole de valeur m, avec $0<=m<M$ ladite fonction $h_e$ ayant une forme correspondant à une combinaison de $2K + 1$ impulsions élémentaires :

$$h_e(m, t) = \sum_{i=1}^{K} w_e(m, i)\left(g(+a_{e,m,i}, \sigma_{e,m,i}, t) + g(m, -a_{e,m,i}, \sigma_{e,m,i}, t)\right)$$
$$+ \left(1 - 2\sum_{i=1}^{K} w_e(m, i)\right) g(0, \sigma_{e,m,0}, t)$$

où la fonction g est une fonction continue, d'écart-type écart-type $\sigma$ et de coefficients de pondération w(i) optimisés, correspondant respectivement à $w_e(m,i)$ et $\sigma_{e,m,i}$, $a_{e,m,i}$ est le symbole ainsi que plusieurs de ses dérivées successives afin de limiter la largeur de spectre du signal émis et a une intégrale égale à 1, K le degré de liberté associé au coefficient de pondération w(i),

- appliquer la somme des impulsions pondérées successives à l'entrée d'un oscillateur commandé par tension, afin de générer le signal à émettre,
- filtrer à la réception le signal reçu par un filtre unique de réponse impulsionnelle $C_0(t)$ quel que soit le nombre d'états de la modulation,
- ajuster les paramètres des impulsions de fréquence $h_e(a(n), t)$ et $C_0(t)$ afin de minimiser l'interférence inter-symboles.

La fonction $g(a, \sigma, t)$ est, par exemple, une gaussienne normalisée de moyenne a, point autour duquel est centrée la fonction d'écart-type $\sigma$, et t un instant donné.

La fonction $g(a, \sigma, t)$ est, par exemple, une gaussienne normalisée de moyenne a et d'écart-type $\sigma$ ou toute autre fonction de largeur et de position ajustables ayant suffisamment de degrés de continuité.

Le filtre de réception de réponse impulsionnelle $C_0(t)$ peut être construit de la manière suivante :
choisir une impulsion de réception $h_r(t)$ construite selon la même méthode que les impulsions à l'émission $h_e(m, t)$, à savoir :

$$h_r(t) = \sum_{i=1}^{K} w_r(i)\left(g(+a_{r,i}, \sigma_{r,i}, t) + g(-a_{r,i}, \sigma_{r,i}, t)\right)$$
$$+ \left(1 - 2\sum_{i=1}^{K} w_r(i)\right) g(0, \sigma_{r,0}, t)$$

où la fonction g est une fonction continue, d'écart-type $\sigma$ et de coefficients de pondération $w_r(i)$ optimisés" $a_{r,i}$ est le symbole ainsi que plusieurs de ses dérivées successives afin de limiter la largeur de spectre du signal émis et a une intégrale égale à 1, K le degré de liberté associé au coefficient de pondération $w(i)$, $\sigma_{r,i}$, est l'écart type pour la gaussienne i en réception et t un instant donné,

calculer l'intégrale de $h_r(t)$, notée $f_r(t)$ :

$$f_r(t) = \int_{-\infty}^{t} h_r(x)\, dx$$

puis la fonction $S_0(t)$, donnée par :

$$
\begin{aligned}
S_0(t) &= \sin\left(\frac{\pi}{2}\, f_r(t)\right) & 0 \leq t \leq L\,T \\
S_0(t) &= \sin\left(\frac{\pi}{2}\,(1 - f_r(t - L\,T))\right) & L\,T \leq t \leq 2\,L\,T
\end{aligned}
$$

et enfin la composante du filtre adapté $C_0(t)$ :

$$C_0(t) = \prod_{i=0}^{L-1} S_0(t + i\,T)$$

L'invention concerne un procédé de démodulation mettant en oeuvre les étapes du procédé exposées ci-avant dans le cas où la fonction $g(a, \sigma, t)$ est une gaussienne normalisée de moyenne a et d'écart-type $\sigma$ ou toute autre fonction de largeur et de position ajustables ayant suffisamment de degrés de continuité

Selon un mode de réalisation, le procédé peut comporter l'insertion de filtres passe-bande insérés à l'émission et / ou à la réception pour limiter la largeur de bande du signal émis et / ou éviter de recevoir des brouilleurs décalés en fréquence. L'optimisation des coefficients définissant les impulsions de fréquence $h_e(m, t)$ ou $h_e(a(n), t)$ et le filtre de réception $C_0(t)$ est faite pour minimiser l'interférence inter-symboles en tenant compte de l'influence du ou des filtre(s) interposé(s).

L'invention concerne aussi un système selon la revendication 7.

L'invention concerne aussi un système selon la revendication 8.

D'autres caractéristiques et avantages du procédé et du système selon l'invention apparaîtront mieux à la lecture de la description qui suit d'un exemple de réalisation donné à titre illustratif et nullement limitatif annexé des figures qui représentent :

- La figure 1, la production d'un signal pour les modulations à phase continue,
- La figure 2 la représentation de l'impulsion générée par un bit unique en sortie de filtre,
- La figure 3, un exemple de récepteur selon l'état de l'art connu,
- La figure 4a, un exemple de constellation (valeurs de $D(n\,T)$ dans la figure 3), pour le cas à 4 états et la figure 4b, un exemple de constellation obtenue pour le cas à 8 états,
- La figure 5 un exemple d'architecture d'émetteur selon l'invention
- La figure 6a, les impulsions de fréquence $h_e(0)$, $h_e(1)$, $h_e(2)$ et $h_e(3)$ au niveau de l'émetteur dans le cas d'une modulation à 4 états, la figure 6b, la réponse impulsionnelle du filtre adapté à la réception, la figure 6c, le spectre en fréquence pour une modulation binaire, la figure 6d, le spectre en fréquence pour une modulation à 4 états et plus,
- Les figures 7a, 7b, 7c et 7d, les constellations finales obtenues après démodulation d'un signal modulé et démodulé en exécutant les étapes du procédé selon l'invention,
- La figure 8, un exemple de spectre en fréquence confiné, et

- La figure 9, la constellation obtenue lorsque le spectre en fréquence est confiné.

Afin de mieux faire comprendre l'objet de la présente invention, le Demandeur va décrire un système d'émission-réception pour un signal numérique modulé avec une modulation à amplitude constante ou quasi-constante de type CPM. Pour cela, un rappel sur les principes des modulations CPM, vont être exposés dans un premier temps.

**Rappel sur les modulations à phase continue (CPM)**

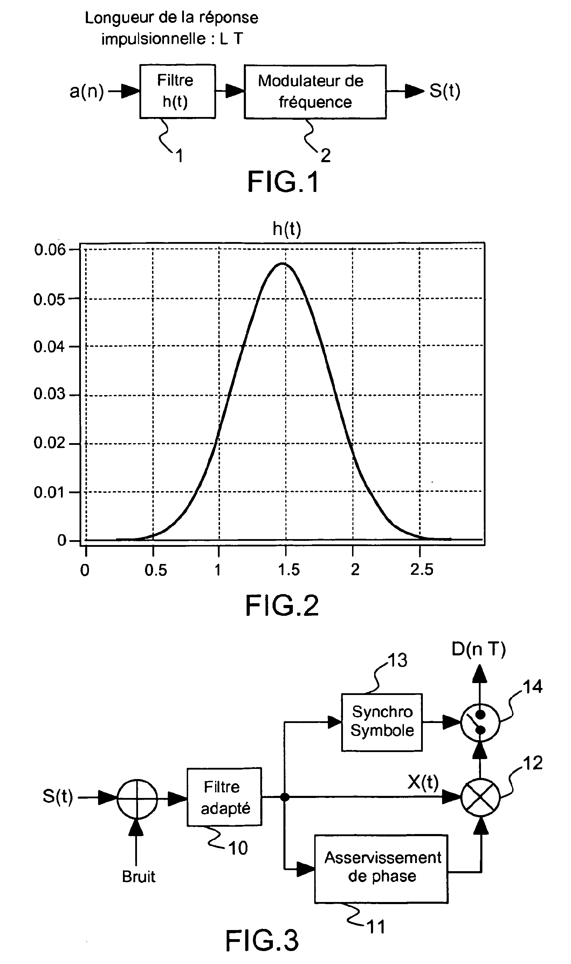

La figure 1 représente un schéma de modulation à phase continue. Les données à transmettre se présentent sous la forme d'une suite ou succession de symboles a(n). Un ou plusieurs bits sont associés à un symbole à transmettre. Si le symbole a(n) véhicule un bit d'information, sa constellation comportera deux états, s'il véhicule deux bits, sa constellation comportera quatre états et ainsi de suite, pour un symbole véhiculant n bits, sa constellation comportera $2^n$ états. La durée d'un symbole est T ; l'inverse de T, exprimé en BAUDS, est la vitesse de modulation.

Pour une série d'impulsions de Dirac espacées les unes des autres d'une durée égale à T, à savoir a(n) $\delta$(t-nT) : les valeurs des symboles a(n) définissent l'information à transmettre via cette série d'impulsions.

Pour une modulation binaire, les symboles a(n) ne prennent que les valeurs 0 ou 1. La valeur 0 donne lieu à une rotation de phase de $h\pi$ et la valeur 1 à une rotation de phase de $-h\pi$.

La constante h est appelée l'indice de modulation et vaut le plus souvent 1/2.

Soit enfin une impulsion décrite par une fonction h(t) définie sur une durée égale à LT (L entier) et nulle ailleurs et dont l'intégrale de 0 à L T vaut 1.

La suite des impulsions de Dirac, après transformation en rotations de phase, est convoluée avec (filtrée par) h(t), 1, et le résultat attaque un modulateur 2 de fréquence (appelé aussi VCO pour "Voltage Controlled Oscillator") qui génère un signal centré sur la fréquence d'émission et décalé par rapport à elle d'une quantité proportionnelle à son entrée.

Le signal de sortie du modulateur de fréquence est donné par la formule :

$$S(t) = \cos\left(2\pi F_0 t + \sum_{n=-\infty}^{\infty} a(n) \int_{-\infty}^{t} h(x - n T)\, dx\right) \quad (1)$$

En notation complexe, plus condensée et plus commode à manipuler, la relation (1) devient :

$$S(t) = \prod_{n=-\infty}^{\infty} e^{j\, a(n)\, f(t - n T)} \quad (2)$$

où la fonction f(t) est l'intégrale de h(t), valant 0 pour t négatif et 1 si t est supérieur à LT, le symbole $\Pi$ correspond à la multiplication.

La figure 2 illustre un exemple d'impulsion h(t) et f(t) avec L = 3, qui est une Gaussienne d'écart-type 0.35 T.

La démodulation cohérente nécessite de connaître la "phase de référence" de la porteuse, afin de s'assurer qu'un signal émis avec une phase donnée soit bien vu par le récepteur avec la même phase. Elle nécessite donc un système d'estimation de la phase qui utilise souvent des symboles connus a priori insérés dans le signal modulé.

Un schéma de récepteur selon l'art antérieur possible est illustré à la figure 3.

Le signal S(t) reçu par te démodulateur auquel se rajoute du bruit lié à la transmission est filtré par un filtre adapté 10, c'est-à-dire un filtre linéaire optimal permettant de maximiser le rapport signal à bruit. Le résultat de cette opération X(t) est ensuite transmis à un module 11 qui estime la rotation de phase apportée par le canal de transmission et le récepteur, la sortie de ce module multiplie X(t) à l'aide d'un module de multiplication complexe 12 par le conjugué de la rotation de phase estimée. Le signal X(t) est aussi mis en entrée d'un module 13 qui estime l'instant d'échantillonnage optimum (synchronisation symbole). Le signal X(t), après correction de phase est ensuite transmis à un module de prise de décision 14 qui reçoit un signal de synchronisation au rythme symbole 13, ce qui permet de déterminer la valeur du symbole décidé D(nT) reçu à l'instant nT.

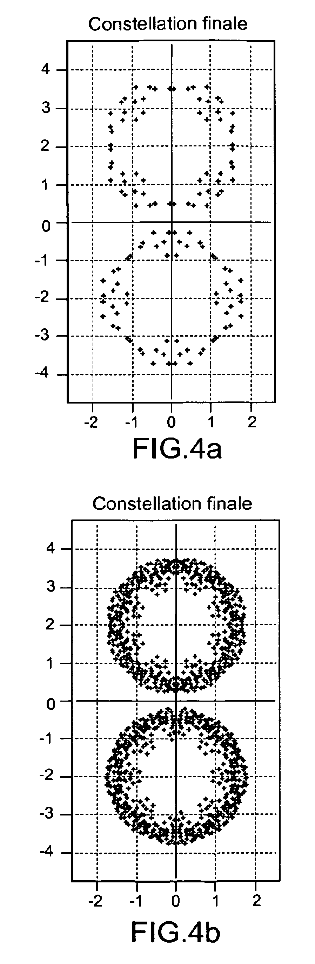

Les constellations obtenues pour les signaux D(nT) sont représentées aux figures 4a, 4b. Il existe en fait, dans cet exemple, deux constellations distinctes, selon la parité du symbole courant. C'est pourquoi les figures 4a, 4b montrent les deux constellations séparément, respectivement dans les cas à 4 états et à 8 états.

En théorie, en l'absence d'interférences intersymboles, les constellations devraient comporter uniquement 2, 4, 8 ou 16 points régulièrement répartis sur un cercle centré à l'origine, le nombre de points étant égal au nombre d'états.

Le simple examen visuel de ces figures 4a et 4b (obtenues dans le cas où le signal n'est pas bruité) montre à quel point il peut être difficile de décider de la valeur du symbole courant parmi 4 (8) possibilités du fait de l'interférence pouvant exister entres les symboles. Cette interférence est inévitable lorsque la durée L T de l'impulsion de fréquence est supérieure à T, durée d'un symbole, et amplifiée par l'effet de traînage du filtre adapté 10 dans la figure 3.

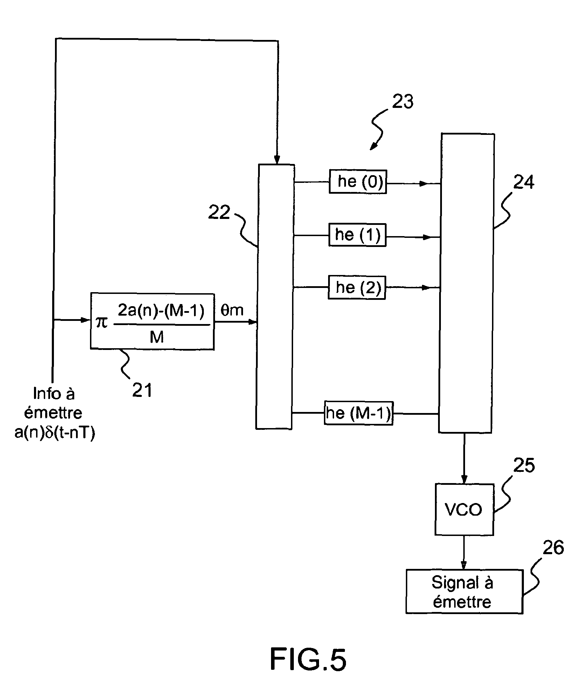

La figure 5 représente un exemple d'architecture pour un émetteur selon l'invention.

L'information à émettre se présente, comme il a été dit, sous la forme d'une succession de symboles a (n), la valeur du symbole à émettre étant ici par convention égale à 0, 1, ... M- 1. Par exemple, l'information peut se présenter sous la forme d'une suite d'impulsions de Dirac. La suite a (n) $\delta$ (t- nT) est transmise d'une part à un module de rotation de phase 21 produisant en sortie la valeur $\theta$ (n) $=\pi$ [2a (n)- (M- 1) ] /M et en parallèle à un démultiplexeur 22. A partir de cette valeur $\theta$ (n) et de la séquence de symboles, le démultiplexeur 22 extrait les phases $\theta$ (n) constituant une traduction de l'information à émettre. Chacune des phases extraites est transmise à un filtre donné dans un banc de M filtres 23 dont la fonction de transfert $h_e$ (m, t) possède une structure qui est détaillée plus loin dans la description. Ce banc de filtres a notamment pour fonction de moduler les symboles avant de les transmettre individuellement à un sommateur 24 qui combine les symboles a' (n) modulés avant de les transmettre à un oscillateur commandé en tension ou VCO 25 et à un module d'émission 26.

Le récepteur est identique à celui décrit figure 3 avec comme différence essentielle, le fait que l'interférence inter-symboles présente dans le signal D(n T) est extrêmement réduite, ce qui simplifie le récepteur qui n'a plus besoin de compenser ladite interférence inter-symboles.

**Constatation préliminaire**

Dans une version antérieure de l'invention, le rapport signal / bruit "intrinsèque" (lié à l'interférence inter-symboles résiduelle) est de l'ordre de 20 dB. Ce qui signifie que ce bruit sera présent que la liaison soit bonne ou qu'elle soit mauvaise.

Par exemple, il est la cause d'une dégradation des performances qui peut être non négligeable : si le bruit extérieur est à 20 dB en dessous du signal; le bruit intrinsèque (de même intensité) vient s'y rajouter si bien que les performances sont ce qu'elles seraient avec un rapport signal/bruit de 17 dB sans bruit intrinsèque. Il convient donc de diminuer sensiblement ce bruit ce qui est l'objet même de la présente invention.

**Du côté émetteur**

L'idée consiste à modifier dans un premier temps le modulateur selon l'art antérieur de la partie émetteur qui utilisait une fonction $h_e$(t) égale à une combinaison de K + 1 gaussiennes, donnée par :

$$h_e(t) = \sum_{i=0}^{K} w(i) \, h(t - i \, T)$$
$$\text{avec}$$
$$\sum_{i=0}^{K} w(i) = 1$$

Il y avait donc K degrés de liberté pour choisir les "poids" w(i) ou coefficients de pondération des gaussiennes combinées.

L'idée directrice de la présente invention consiste à augmenter le nombre de degrés de liberté pour parfaire l'optimisation.

Afin de mieux illustrer le procédé et le système selon l'invention, l'explication va être donnée en prenant comme fonction de base une gaussiennne notée g(a, $\sigma$, t), à savoir la gaussienne normalisée, centrée en a et d'écart-type $\sigma$. Sans sortir du cadre de l'invention la fonction peut aussi être toute fonction de largeur et de position ajustables ayant un nombre de degrés de continuité donné.

La fonction $h_e$(t) sera remplacée par une combinaison symétrique de 2 K+1 gaussiennes de moyennes, écart-type $\sigma$ et pondération w(i) optimisés et ce, en fonction de la valeur m du symbole à transmettre (0 <= m < M) avec M = 2, 4, 8, 16 selon les cas :

$$h_e(m, t) = \sum_{i=1}^{K} w_e(m, i)\left(g(+a_{e, m, i}, \sigma_{e, m, i}, t) + g(-a_{e, m, i}, \sigma_{e, m, i}, t)\right) + \left(1 - 2\sum_{i=1}^{K} w_e(m, i)\right) g(0, \sigma_{e, m, 0}, t)$$

Le nombre de degrés de liberté passe alors à 3 K + 1, pour chacune des M / 2 impulsions de fréquence, ce qui permet l'optimisation plus poussée. M / 2 car les impulsions de fréquence pour une variation de phase données sont l'opposé de celles pour une variation de phase contraire.

Si, à l'indice m est associée une variation de phase de $\theta$ (n), généralement donnée par :

$$\theta (m) = \frac{\pi}{M}(2\,m - (M - 1))$$

$$\theta (m) = \frac{\pi}{M}(2\,m - (M - 1))$$

et que le support de $h_e$ (m, t) vaut L T (T = durée du symbole), la fréquence instantanée à l'instant $\tau$ sera alors donnée par :

$$f(\,n\,T + \tau\,) = \sum_{i=0}^{L-1} \theta (m_{n-i})\, h_e(\,m_{n-i}, \tau + i\,T\,) \text{ pour } 0 \le \tau \le T$$

où $m_n$ est la valeur du symbole courant à émettre à l'instant n T.

Les différentes valeurs de forme d'onde ainsi obtenues seront, par exemple, mémorisées dans une mémoire morte pour générer numériquement les impulsions de fréquence à émettre.

La variation de phase associée à chaque symbole a(n) formant l'information à transmettre est filtrée via le filtre $h_e$(a(n), t) avant d'être transmise à un sommateur, puis au VCO.

## Du côté récepteur,

Dans l'article cité en introduction, il est démontré que, dans le cas binaire, le signal CPM peut être décomposé en impulsions élémentaires réelles modulées en phase et que la première d'entre elles, notée $C_0$(t) véhicule la majeure partie de l'énergie du signal. D'après la théorie de la modulation, si elle véhiculait la totalité de l'énergie du signal, elle coïnciderait avec le filtre adapté au signal, celui qui maximise le rapport signal / bruit. Sinon, c'en est généralement une très bonne approximation, du moins pour les CPM à base de gaussienne. C'est cette approximation qui va être choisie pour expliciter les étapes du procédé permettant de déterminer les coefficients des filtres de modulation et de démodulation.

Dans le cas d'une modulation d'indice moyen h égal à 1/2, le procédé fait l'approximation suivante : un filtre adapté pour un signal binaire, le sera aussi pour des modulations à 4, 8,16 états ayant le même indice moyen.

Par conséquent, à la réception, le filtre adapté sera calculé pour une fonction $h_r$(t) donnée par une équation similaire à celle utilisée pour le filtre d'émission :

$$h_r(t) = \sum_{i=1}^{K} w_r(i)\left(g(+a_{r, i}, \sigma_{r, i}, t) + g(-a_{r, i}, \sigma_{r, i}, t)\right) + \left(1 - 2\sum_{i=1}^{K} w_r(i)\right) g(0, \sigma_{r, 0}, t)$$

avec $a_r$ le point autour duquel est centré la gaussienne g, $\sigma_{r,i}$ l'écart type de cette gaussienne en réception et t un instant donné.

En l'occurrence, le procédé détermine d'abord l'intégrale de $h_r(t)$, notée $f_r(t)$ :

$$f_r(t) = \int_{\infty}^{t} h_r(x)\, dx$$

puis la fonction $S_0(t)$, donnée par :

$$\begin{aligned} S_0(t) &= \sin\left(\frac{\pi}{2} f_r(t)\right) & 0 \leq t \leq L\,T \\ S_0(t) &= \sin\left(\frac{\pi}{2}\left(1 - f_r(t - L\,T)\right)\right) & L\,T \leq t \leq 2\,L\,T \end{aligned}$$

et enfin la composante du filtre adapté $C_0(t)$:

$$C_0(t) = \prod_{i=0}^{L-1} S_0(t + i\,T)$$

$$C_0(t) = \prod_{i=0}^{L-1} S_0(t + i\,T)$$

avec $\Pi$ le symbole mathématique représentant le produit des fonctions $S_0$ sur L où LT est la durée d'un symbole.

Procédure d'optimisation et résultats.

Le calcul théorique des paramètres des différentes gaussiennes intervenant à l'émission et à la réception est quasi impossible.

Noter qu'il n'est fait qu'une fois, lors de la conception du système.

On utilise plutôt un algorithme itératif avec contraintes dont le principe est de maximiser le rapport signal / interférences en sortie du filtre adapté.

On part de valeurs tirées au hasard au voisinage de valeurs "raisonnables" et on modifie progressivement les paramètres en gardant les modifications qui améliorent le résultat.

On n'optimise simultanément les paramètres à l'émission ET à la réception (coefficients a, $\sigma$, wi) que pour la modulation nécessitant le rapport signal / bruit le plus élevé. Dans l'exemple donné, on considère la modulation à 8 états.

Pour toutes les autres modulations, on garde le filtre $C_0(t)$ ainsi obtenu et l'on n'optimise que les paramètres d'émission.

Sachant que ce type de modulation a une largeur de bande supérieure à celle d'une GMSK classique, la contrainte consistera à rejeter tout jeu de paramètres conduisant à une "largeur de bande" B supérieure à une valeur maximale $B_{max}$, dépendant du nombre d'états de la modulation.

Si h(f) est le spectre en fréquence de la modulation, le critère sera donc le suivant :

$$B = \sqrt{\int_{-\infty}^{-\infty} f^2 \, |h(f)|^2 \, df} \leq B_{max}(M)$$

Plusieurs formes d'onde -en fait très peu différentes- selon les spécifications système peuvent ainsi être définies.

Les étapes qui ont été explicitées précédemment, peuvent être exécutées pour toute fonction de base présentant suffisamment de degrés de continuité, par exemple en remplaçant la gaussienne par une fonction de Bessel modifiée :

$$b(p, m, \sigma, t) = I_0 \left( p \sqrt{1 - \frac{(t - m)^2}{\sigma^2}} \right)$$

La suite de la description donne plusieurs exemples chiffrés de mise en oeuvre du procédé pour déterminer les valeurs des paramètres pour les fonctions dont la combinaison forme un filtre.

Pour la suite de l'exemple de la description, on a pris un nombre $K = 1$, c'est-à-dire que l'impulsion de fréquence est la somme d'une gaussienne principale dont on retranche de part et d'autre deux gaussiennes identiques.

Par exemple, pour une énergie hors bande maximum de -35 dB et un rapport S/B minimum de 27 dB, on obtient les résultats suivants :

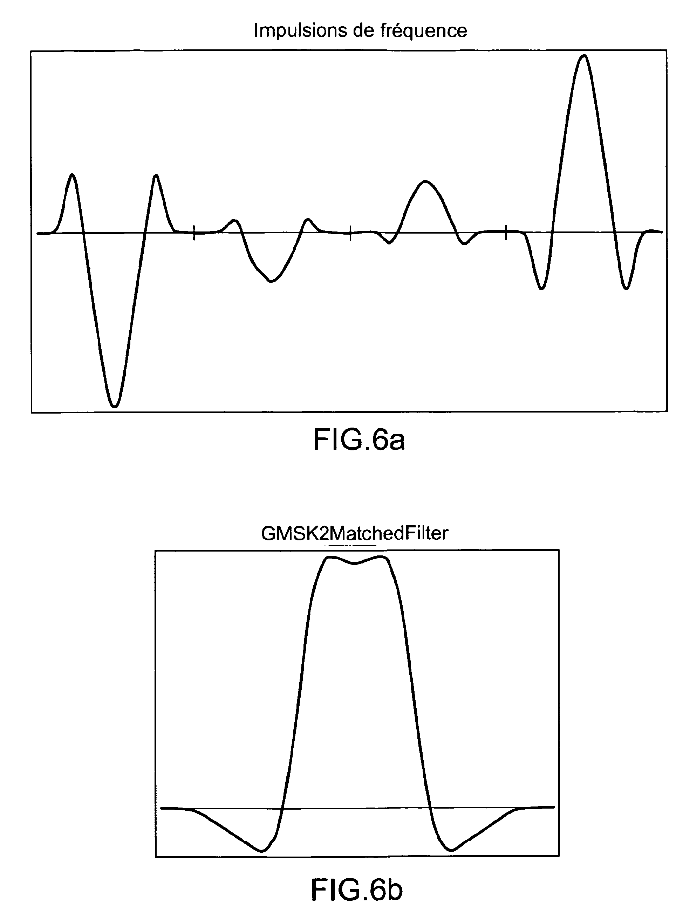

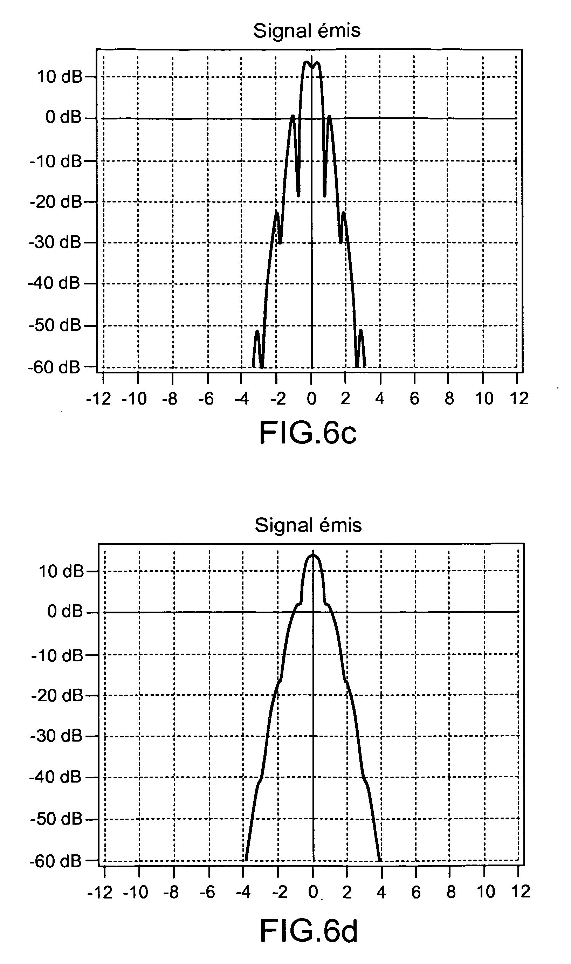

- les fonctions de modulation $h_e(m, t)$ (ici mises bout à bout pour M = 4) montrées figure 6 a ;
- la réponse impulsionnelle du filtre adapté, côté réception, $C_0(t)$ montrée figure 6b ;

Le "filtre adapté", a, après optimisation, les paramètres suivants :

$$\begin{array}{l} K = 1 \\ \sigma_{r,0} = 0.310 \\ w_r(1) = -1.760 \\ a_{r,1} = 0.739 \\ \sigma_{r,1} = 0.142 \end{array}$$

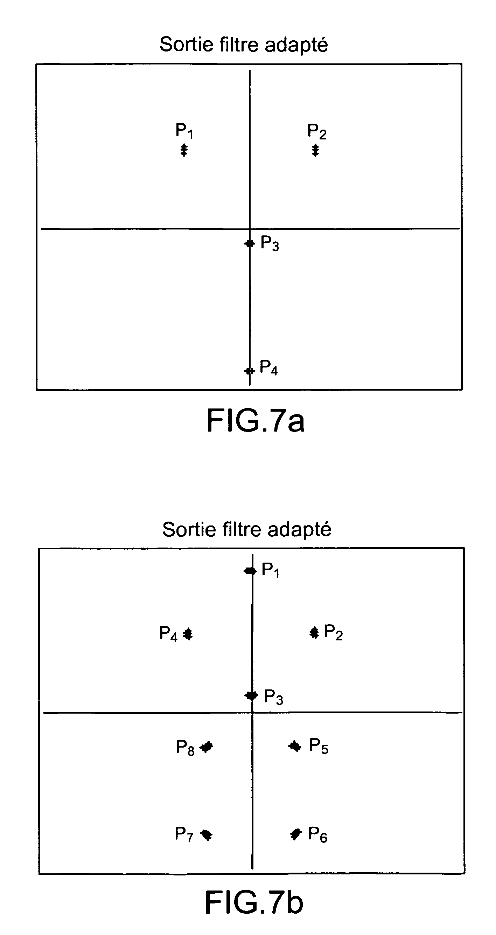

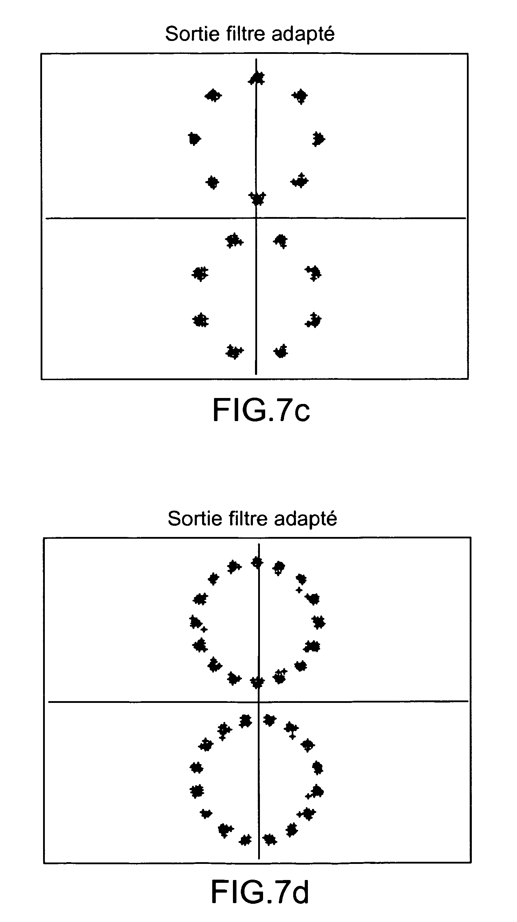

- le spectre en fréquence pour une modulation binaire (l'unité de fréquence est la vitesse de modulation, en bauds), figure 6c ;
- le spectre en fréquence pour M = 4, 8, 16 états (c'est quasiment le même dans les trois cas) figure 6d ;
- et enfin les (paires de) constellations obtenues pour M = 2, 4, 8 et 16 états , figures 7a, 7b, 7c et 7d.

Pour M = 2, paramètres après optimisation pour $h_e(0, t)$, tenant compte du fait que $h_e(1, t) = h_e(0, t)$ :

$$\begin{array}{l} K = 1 \\ \sigma_{e,0,0} = 0.370 \\ w_{e,0}(1) = -6.240 \\ a_{e,0,1} = 0.723 \\ \sigma_{e,0,1} = 0.142 \end{array}$$

Pour M = 4, paramètres après optimisation pour $h_e(0, t)$ et $h_e(1, t)$, tenant compte du fait que $h_e(3, t) = h_e(0,$

t) et $h_e(2, t) = h_e(1, t)$ :

$$K = 1$$
$$\sigma_{e, 0, 0} = 0.305 \quad \sigma_{e, 1, 0} = 0.321$$
$$w_{e, 0}(1) = -1.280 \quad w_{e, 1}(1) = -0.803$$
$$a_{e, 0, 1} = 0.796 \quad a_{e, 1, 1} = 0.673$$
$$\sigma_{e, 0, 1} = 0.140 \quad \sigma_{e, 1, 1} = 0.137$$

Pour M = 8, paramètres après optimisation pour $h_e(0, t)$, $h_e(1, t)$, $h_e(2, t)$ et $h_e(3, t)$ tenant compte du fait que $h_e(7, t) = h_e(0, t)$, $h_e(6, t) = h_e(1, t)$, $h_e(5, t) = h_e(2, t)$ et $h_e(4, t) = h_e(3, t)$ :

$$K = 1$$
$$\sigma_{e, 0, 0} = 0.309 \quad \sigma_{e, 1, 0} = 0.311 \quad \sigma_{e, 2, 0} = 0.310 \quad \sigma_{e, 3, 0} = 0.310$$
$$w_{e, 0}(1) = -1.450 \quad w_{e, 1}(1) = -1.238 \quad w_{e, 2}(1) = -0.7010 \quad w_{e, 3}(1) = -0.409$$
$$a_{e, 0, 1} = 0.803 \quad a_{e, 1, 1} = 0.757 \quad a_{e, 0, 2} = 0.674 \quad a_{e, 1, 3} = 0.720$$
$$\sigma_{e, 0, 1} = 0.142 \quad \sigma_{e, 1, 1} = 0.142 \quad \sigma_{e, 0, 2} = 0.142 \quad \sigma_{e, 1, 3} = 0.142$$

Le rapport S/B intrinsèque obtenu présente une amélioration d'au moins 7 dB par rapport à la solution proposée dans un brevet précédent.

|  |  |
|---|---|
| M = 2 états: | SNRi > 47 dB |
| M = 4 états: | SNRi > 33 dB |
| M = 8 états: | SNRi > 28 dB |
| M = 16 états: | SNRi > 27 dB |

**Caractéristiques spectrales.**

Les spectres en fréquence montrés dans le paragraphe précédent présentent une décroissance forte et continue si l'on s'éloigne de la porteuse, ce qui est caractéristique d'une modulation basée sur des fonctions gaussiennes dont toutes les dérivées sont continues à n'importe ordre. Cependant, le fait que les impulsions de fréquence utilisées présentent des variations temporelles plus rapides qu'une gaussienne unique a pour conséquence que le spectre en fréquence est plus large.

Il est possible de limiter le spectre en fréquence à sa partie centrale en filtrant le signal juste avant le modulateur. Ceci se traduit par le fait que l'amplitude du signal émis n'est plus strictement constante et ceci se traduit par un "facteur crête" (rapport entre la puissance maximale à émettre et la puissance moyenne émise) qui évolue entre 1 et 1.5 dB si le filtre est bien choisi, ce qui est tout à fait acceptable. L'amplificateur de puissance doit être "un peu" linéaire et il est toujours possible de pré-distordre le signal modulé pour compenser quasi totalement sa non-linéarité. En utilisant le même filtre à la réception, les performances sont à peine dégradées.

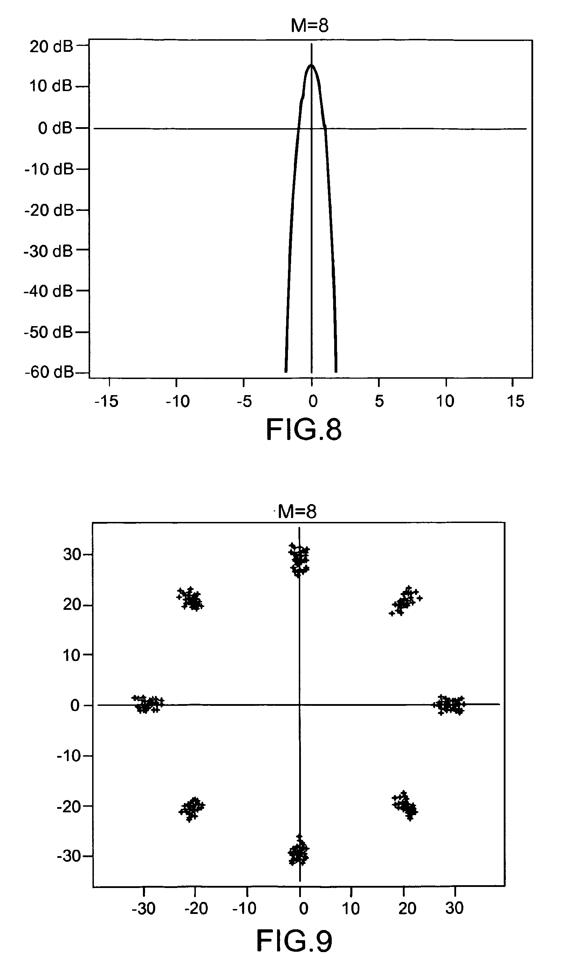

La figure 8 représente le spectre en fréquence après filtrage (le facteur crête est de 1.3 dB) dans le cas à 8 états. On peut vérifier que la pollution des canaux adjacents par un brouilleur puissant sera beaucoup plus faible qu'auparavant.

Sur la figure 9 est représentée la constellation obtenue toujours avec 8 états : la dégradation par rapport au cas sans filtrage est insignifiante, alors que les paramètres d'émission et de réception n'ont pas été modifiés.

Si le filtre utilisé à l'émission après le modulateur et le filtre utilisé en réception avant le filtre adapté sont bien caractérisés, l'optimisation des différents coefficients peut être refaite afin de tenir compte de leur présence.

Le procédé selon l'invention présente notamment les avantages suivants :

**Du côté de l'Emission**

Maximiser l'efficacité de l'émission grâce à une modulation à enveloppe constante
Maximiser le débit transmis grâce à une modulation à plus de 2 états
Ne pas nécessiter d'émetteur ayant une bonne linéarité

**Du côté de la Réception**

Avoir un récepteur aussi simple que possible même pour une modulation à plus de deux états (4, 8 ou 16).
Obtenir des performances très proches des performances théoriques
Pouvoir utiliser les algorithmes classiquement mis en oeuvre pour les modulations dites "linéaires", par exemple
un égaliseur de type quelconque pour lutter contre les aléas de propagation.

**Revendications**

1. Procédé de modulation à amplitude constante et phase continue de données numériques et de démodulation dudit signal modulé, lesdites données se présentant sous la forme de symboles pouvant prendre un nombre M d'états supérieur à 2, **caractérisé en ce qu'**il comporte en combinaison au moins les étapes suivantes :

• récupérer les symboles $a(n)$ de données numériques à transmettre, se présentant avec un intervalle temporel $T$ constant,
• associer à chaque symbole $a(n)$ une impulsion de fréquence notée $h_e(a(n))$, impulsion de fréquence de longueur $L\,T$, avec $L$ entier supérieur ou égal à 1, et dont la forme dépend explicitement de la valeur de $a(n)$,
• pondérer l'impulsion de fréquence $h_e(a(n), t)$ par la variation de phase totale associée à $a(n)$, cette variation de phase totale étant de la forme $\pi(2a(n) - (M-1))/M$ avec $a(n) = 0, 1, ..., M-1$, et pour un symbole de valeur $m$, avec $0<=m<M$ ladite fonction $h_e$ ayant une forme correspondant à une combinaison de $2K+1$ impulsions élémentaires :

$$h_e(m, t) = \sum_{i=1}^{K} w_e(m, i)\left(g(+a_{e,m,i},\, \sigma_{e,m,i},\, t) + g(m, -a_{e,m,i},\, \sigma_{e,m,i},\, t)\right) + \left(1 - 2\sum_{i=1}^{K} w_e(m, i)\right) g(0, \sigma_{e,m,0},\, t)$$

où la fonction $g$ est une fonction continue, d'écart-type $\sigma$ et de coefficients de pondération $w(i)$ optimisés correspondant respectivement à $w_e(m,i)$ et $\sigma_{e,m,i}$, $a_{e,m,i}$ est le symbole, ainsi que plusieurs de ses dérivées successives afin de limiter la largeur de spectre du signal émis et a une intégrale égale à 1, $K$ le degré de liberté associé au coefficient de pondération $w(i)$,
• appliquer la somme des impulsions pondérées successives à l'entrée d'un oscillateur commandé par tension (25), afin de générer le signal à émettre,
• filtrer (23) à la réception le signal reçu par un filtre unique de réponse impulsionnelle $C_0(t)$ quel que soit le nombre d'états de la modulation,
• ajuster les paramètres des impulsions de fréquence $h_e(a(n), t)$ et la réponse impulsionnelle du filtre $C_0(t)$ afin de minimiser l'interférence inter-symboles.

2. Procédé selon la revendication 1 **caractérisé en ce que** la fonction $g(a, \sigma, t)$ est une gaussienne normalisée de moyenne $a$, point autour duquel est centrée la fonction et d'écart-type $\sigma$, $t$ un instant donné.

3. Procédé selon la revendication 1 **caractérisé en ce que** la fonction $g(a, \sigma, t)$ est une fonction de largeur et de position ajustables ayant un nombre de degrés de continuité donné.

4. Procédé selon la revendication 1 où le filtre de réception de réponse impulsionnelle $C_0(t)$ est construit de la manière suivante :
choisir une impulsion de réception $h_r(t)$ construite selon la même méthode que les impulsions à l'émission $h_e(m, t)$, à savoir :

$$h_r(t) = \sum_{i=1}^{K} w_r(i) \left( g(+a_{r,i}, \sigma_{r,i}, t) + g(-a_{r,i}, \sigma_{r,i}, t) \right) + \left( 1 - 2 \sum_{i=1}^{K} w_r(i) \right) g(0, \sigma_{r,0}, t)$$

où la fonction g est une fonction continue, d'écart-type $\sigma$ et de coefficients de pondération $w_r(i)$ optimisés, $a_{r,i}$ est le symbole ainsi que plusieurs de ses dérivées successives afin de limiter la largeur de spectre du signal émis et a une intégrale égale à 1, K le degré de liberté associé au coefficient de pondération $w_r(i)$, $\sigma_{r,i}$ l'écart type de cette gaussienne en réception et t un instant donné.

calculer l'intégrale de $h_r(t)$, notée $f_r(t)$ :

$$f_r(t) = \int_{-\infty}^{t} h_r(x)\, dx$$

puis la fonction $S_0(t)$, donnée par

$$S_0(t) = \sin\left(\frac{\pi}{2}\, f_r(t)\right) \qquad\qquad 0 \leq t \leq L\,T$$
$$S_0(t) = \sin\left(\frac{\pi}{2}\, (1 - f_r(t - L\,T))\right) \qquad L\,T \leq t \leq 2\,L\,T$$

et enfin la composante du filtre adapté $C_0(t)$ :

$$C_0(t) = \prod_{i=0}^{L-1} S_0(t + i\,T)$$

5. Procédé selon la revendication 4 où la fonction $g(a, \sigma, t)$ est une gaussienne normalisée de moyenne a et d'écart-type $\sigma$.

6. Procédé selon la revendication 4 **caractérisé en ce que** la fonction $g(a, \sigma, t)$ est une fonction de largeur et de position ajustables de degrés de continuité donnés.

7. Système de modulation à amplitude constante et phase continue de données numériques et de démodulation dudit signal modulé, lesdites données se présentant sous la forme de symboles pouvant prendre un nombre M d'états supérieur à 2, **caractérisé en ce qu'**il comporte au moins les éléments suivants :

    • un émetteur comportant un banc de filtres (23) ayant une fonction de transfert déterminée en exécutant au moins les étapes suivantes :
    • récupérer les symboles a(n) de données numériques à transmettre, se présentant avec un intervalle temporel T constant,
    • associer à chaque symbole a(n) une impulsion de fréquence notée $h_e(a(n))$, impulsion de fréquence de longueur L T, avec L entier supérieur ou égal à 1, et dont la forme dépend explicitement de la valeur de a(n),
    • pondérer l'impulsion de fréquence $h_e(a(n), t)$ par la variation de phase totale associée à a(n), cette variation de phase totale étant de la forme $\pi(2a(n) - (M-1))/M$ avec a(n) = 0, 1, ..., M-1, et pour un symbole de valeur m, avec 0<=m<M ladite fonction $h_e$ ayant une forme correspondant à une combinaison de 2 K + 1 impulsions élémentaires :

$$h_e(m, t) = \sum_{i=1}^{K} w_e(m, i) \left( g(+a_{e, m, i}; \sigma_{e, m, i}; t) + g(m, -a_{e, m, i}; \sigma_{e, m, i}; t) \right) + \left( 1 - 2 \sum_{i=1}^{K} w_e(m, i) \right) g(0, \sigma_{e, m, 0}, t)$$

où la fonction g est une fonction continue, d'écart-type $\sigma$ et de coefficients de pondération w(i) optimisés correspondant respectivement à $w_e(m,i)$ et $\sigma_{e,m,i}$, $a_{e,m,i}$ est le symbole, ainsi que plusieurs de ses dérivées successives afin de limiter la largeur de spectre du signal émis et a une intégrale égale à 1, K le degré de liberté associé au coefficient de pondération w(i),
• un sommateur (24) adopté à exécuter ladite combinaison et à produire une somme des impulsions pondérées successives,
• un oscillateur commandé par tension (25), adapté à prendre en entrée ladite somme, afin de générer le signal à émettre,
• un module d'émission (26) dudit signal à émettre,
• un filtre unique (10) adapté à filtrer à la réception le signal reçu par ledit filtre, ledit filtre étant un filtre de réponse impulsionnelle $C_0(t)$ quel que soit le nombre d'états de la modulationles paramètres des impulsions de fréquence $h_e(a(n), t)$ et $C_0(t)$ étant ajustés de manière à minimiser l'interférence inter-symboles.

8.  Système selon la revendication 7 **caractérisé en ce qu'**il comporte un filtre de réception de réponse impulsionnelle $C_0(t)$ construit de la manière suivante :
choisir une impulsion de réception $h_r(t)$ construite selon la même méthode que les impulsions à l'émission $h_e(m, t)$, à savoir :

$$h_r(t) = \sum_{i=1}^{K} w_r(i) \left( g(+a_{r, i}, \sigma_{r, i}, t) + g(-a_{r, i}, \sigma_{r, i}, t) \right) + \left( 1 - 2 \sum_{i=1}^{K} w_r(i) \right) g(0, \sigma_{r, 0}, t)$$

où la fonction g est une fonction continue, d'écart- type $\sigma$ et de coefficients de pondération $w_r(i)$ optimisés, $a_{r,i}$ est le symbole ainsi que plusieurs de ses dérivées successives afin de limiter la largeur de spectre du signal émis et a une intégrale égale à 1, K le degré de liberté associé au coefficient de pondération $w_r(i)$, $\sigma_{r,i}$ l'écart type de cette gaussienne en réception et t un instant donné.
calculer l'intégrale de $h_r(t)$, notée $f_r(t)$ :

$$f_r(t) = \int_{-\infty}^{t} h_r(x)\, dx$$

puis la fonction $S_0(t)$, donnée par :

$$S_0(t) = \sin\left(\frac{\pi}{2} f_r(t)\right) \qquad\qquad 0 \ \le t \le L\,T$$
$$S_0(t) = \sin\left(\frac{\pi}{2}(1 - f_r(t - L\,T))\right) \quad L\,T \le t \le 2\,L\,T$$

et enfin la composante du filtre adapté $C_0(t)$ :

$$C_0(t) = \prod_{i=0}^{L-1} S_0(t + i\,T)$$

**9.** Système selon l'une des revendications 7 ou 8 **caractérisé en ce qu'**il comporte au moins un filtre passe-bande inséré à l' émission et / ou à la réception, ledit au moins un filtre étant adapté à limiter la largeur de bande du signal émis et / ou éviter de recevoir des brouilleurs décalés en fréquence.

**Patentansprüche**

**1.** Verfahren zum konstanten Amplituden- und kontinuierlichen Phasenmodulieren von digitalen Daten und zum Demodulieren des modulierten Signals, wobei die Daten in Form von Symbolen vorliegen, die eine Zustandsanzahl M von mehr als 2 annehmen können, **dadurch gekennzeichnet, dass** es in Kombination wenigstens die folgenden Schritte beinhaltet:

• Zurückgewinnen der Symbole a(n) von zu übertragenden digitalen Daten, die ein konstantes Zeitintervall T haben;
• Assoziieren eines Frequenzimpulses, mit $h_e(a(n))$ notiert, mit jedem Symbol a(n), wobei der Frequenzimpuls die Länge L T hat, wobei L eine ganze Zahl gleich oder größer als 1 ist, und dessen Form explizit vom Wert von a(n) abhängig ist;
• Gewichten des Frequenzimpulses $h_e(a(n), t)$ durch die mit a(n) assoziierte Gesamtphasenvariation, wobei diese Gesamtphasenvariation die Form $\pi(2a(n) - (M-1))/M$ hat, mit a(n) = 0, 1, ..., M-1, und für ein Symbol von Wert m, mit $0 <= m < M$, wobei die Funktion $h_e$ eine Form hat, die einer Kombination von $2K+1$ Elementarimpulsen entspricht:

$$h_e(m, t) = \sum_{i=1}^{K} w_e(m, i)\left(g(+a_{e,m,i}; \sigma_{e,m,i}; t) + g(m, -a_{e,m,i}; \sigma_{e,m,i}; t)\right)$$
$$+ \left(1 - 2\sum_{i=1}^{K} w_e(m, i)\right) g(0, \sigma_{e,m,0}\, t)$$

wobei die Funktion g eine kontinuierliche Funktion ist, mit einer Standardabweichung $\sigma$ und mit optimierten Gewichtungskoeffizienten w(i), die $w_e(m,i)$ bzw. $\sigma_{e,m,i}$ entsprechen, $\sigma_{e,m,i}$ das Symbol ist, sowie mehrere seiner aufeinander folgenden Derivate, um die Bandbreite des gesendeten Signals zu begrenzen, und a ein Integral von gleich 1 ist, wobei K der mit dem Gewichtungskoeffizienten w(i) assoziierte Freiheitsgrad ist;
• Anlegen der Summe der aufeinander folgenden gewichteten Impulse an den Eingang eines spannungsgesteuerten Oszillators (25), um das zu sendende Signal zu erzeugen;
• Filtern (23) des empfangenen Signals beim Empfang mit einem einzelnen Impulsantwort-Filter $C_0(t)$, unabhängig von der Zustandszahl der Modulation;
• Einstellen der Parameter der Frequenzimpulse $h_e(a(n),t)$ und der Impulsantwort des Filters $C_0(t)$, um Inter-Symbol-Interferenzen zu minimieren.

**2.** Verfahren nach Anspruch 1, **dadurch gekennzeichnet, dass** die Funktion $g(a, \sigma, t)$ eine normalisierte Gaußsche Funktion mit Mittelwert a, um den die Funktion zentriert ist, und mit Standardabweichung $\sigma$ ist, wobei t ein gegebener Zeitpunkt ist.

3. Verfahren nach Anspruch 1, **dadurch gekennzeichnet, dass** die Funktion $g(a, \sigma, t)$ eine Funktion mit verstellbarer Breite und Position mit einer gegebenen Anzahl von Kontinuitätsgraden ist.

4. Verfahren nach Anspruch 1, wobei das Impulsantwort-Empfangsfilter $Co(t)$ wie folgt konstruiert ist:
   Auswählen eines Empfangsimpulses $h_r(t)$, der mit demselben Verfahren wie die Sendeimpulse $h_e(m,t)$ aufgebaut ist, nämlich:

$$h_r(t) = \sum_{i=1}^{K} w_r(i) \left( g(+a_{r,i}, \sigma_{r,i}, t) + g(-a_{r,i}, \sigma_{r,i}, t) \right) + \left( 1 - 2 \sum_{i=1}^{K} w_r(i) \right) g(0, \sigma_{r,0}, t)$$

wobei die Funktion g eine kontinuierliche Funktion ist, mit Standardabweichung $\sigma$ und optimierten Gewichtskoeffizienten $w_r(i)$, $a_{r,i}$ das Symbol ist, sowie mehrere seiner aufeinander folgenden Derivate, um die Bandbreite des gesendeten Signals zu begrenzen, und a ein Integral von gleich 1 ist, wobei K der mit dem Gewichtungskoeffizient $w_r(i)$ assoziierte Freiheitsgrad ist, $\sigma_{r,i}$ die Standardabweichung dieser Gaußschen Funktion beim Empfang und t ein gegebener Zeitpunkt ist;
Berechnen des Integrals von $h_r(t)$, mit $f_r(t)$ notiert:

$$f_r(t) = \int_{-\infty}^{t} h_r(x)\, dx$$

dann die Funktion $S_0(t)$, ausgedrückt durch:

$$\begin{aligned} S_0(t) &= \sin\left(\frac{\pi}{2} f_r(t)\right) & 0 \leq t \leq L\,T \\ S_0(t) &= \sin\left(\frac{\pi}{2}\left(1 - f_r(t - L\,T)\right)\right) & L\,T \leq t \leq 2\,L\,T \end{aligned}$$

und schließlich die Komponente des adaptierten Filters $C_0(t)$:

$$C_0(t) = \prod_{i=0}^{L-1} S_0(t + i\,T)$$

.

5. Verfahren nach Anspruch 4, wobei die Funktion $g(a, \sigma, t)$ eine normalisierte Gaußsche Funktion mit Mittelwert a und Standardabweichung $\sigma$ ist.

6. Verfahren nach Anspruch 4, **dadurch gekennzeichnet, dass** die Funktion $g(a, \sigma, t)$ eine Funktion mit justierbarer Breite und Position mit einer gegebenen Anzahl von Kontinuitätsgraden ist.

7. System zum konstanten Amplituden- und kontinuierlichen Phasenmodulieren von digitalen Daten und zum Demodulieren des modulierten Signals, wobei die Daten in Form von Symbolen vorliegen, die eine Zustandszahl M von mehr als 2 annehmen können, **dadurch gekennzeichnet, dass** es wenigstens die folgenden Elemente umfasst:

   • einen Sender, der eine Filtergruppe (23) mit einer Transferfunktion umfasst, die durch Ausführen wenigstens der folgenden Schritte ermittelt wird:
   • Zurückgewinnen der Symbole a(n) von zu übertragenden digitalen Daten, die ein konstantes Zeitintervall T haben;

• Assoziieren eines Frequenzimpulses, mit $h_e(a(n))$ notiert, mit jedem Symbol $a(n)$, wobei der Frequenzimpuls die Länge L T hat, wobei L eine ganze Zahl gleich oder größer als 1 ist, und dessen Form explizit vom Wert von $a(n)$ abhängig ist;

• Gewichten des Frequenzimpulses $h_e(a(n), t)$ durch die mit $a(n)$ assoziierte Gesamtphasenvariation, wobei diese Gesamtphasenvariation die Form $\pi(2a(n) - (M-1))/M$ hat, mit $a(n) = 0, 1, ..., M-1$, und für ein Symbol von Wert m, mit $0 <= m < M$, wobei die Funktion $h_e$ eine Form hat, die einer Kombination von $2K + 1$ Elementarimpulsen entspricht:

$$h_e(m, t) = \sum_{i=1}^{K} w_e(m, i) \left(g(+a_{e, m, i}, \sigma_{e, m, i}, t) + g(m, -a_{e, m, i}, \sigma_{e, m, i}, t)\right) + \left(1 - 2\sum_{i=1}^{K} w_e(m, i)\right) g(0, \sigma_{e, m, 0}, t)$$

• wobei die Funktion g eine kontinuierliche Funktion ist, mit einer Standardabweichung $\sigma$ und mit optimierten Gewichtungskoeffizienten $w(i)$, die $w_e(m,i)$ bzw. $\sigma_{e,m,i}$ entsprechen, $a_{e,m,i}$ das Symbol ist, sowie mehrere seiner aufeinander folgenden Derivate, um die Bandbreite des gesendeten Signals zu begrenzen, und a ein Integral von gleich 1 ist, wobei K der mit dem Gewichtungskoeffizienten $w(i)$ assoziierte Freiheitsgrad ist;

• ein Addierglied (24) zum Ausführen der Kombination und zum Erzeugen einer Summe der aufeinander folgenden gewichteten Impulse;

• einen spannungsgesteuerten Oszillator (25) zum Benutzen der Summe als Eingang, um das zu sendende Signal zu erzeugen;

• ein Modul (26) zum Senden des zu sendenden Signals;

• ein einzelnes Filter (10), das beim Empfang zum Filtern des von dem Filter empfangenen Signals ausgelegt ist, wobei das Filter ein Impulsantwortfilter $C_0(t)$ ist, unabhängig von der Zustandszahl der Modulation, wobei die Parameter der Frequenzimpulse $h_e(a(n), t)$ und $C_0(t)$ so justiert werden, dass Inter-Symbol-Interferenzen minimiert werden.

8. System nach Anspruch 7, **dadurch gekennzeichnet, dass** es ein Impulsantwort-Empfangsfilter Co(t) umfasst, das wie folgt aufgebaut ist:

Wählen einer Impulsantwort $h_r(t)$, die mit demselben Verfahren konstruiert ist wie die Sendeimpulse $h_e(m,t)$, nämlich:

$$h_r(t) = \sum_{i=1}^{K} w_r(i) \left(g(+a_{r, i}, \sigma_{r, i}, t) + g(-a_{r, i}, \sigma_{r, i}, t)\right) + \left(1 - 2\sum_{i=1}^{K} w_r(i)\right) g(0, \sigma_{r, 0}, t)$$

wobei die Funktion g eine kontinuierliche Funktion ist, mit Standardabweichung $\sigma$ und optimierten Gewichtskoeffizienten $w_r(i)$, $a_{r,i}$ das Symbol ist, sowie mehrere seiner aufeinander folgenden Derivate, um die Bandbreite des gesendeten Signals zu begrenzen, und a ein Integral von gleich 1 ist, wobei K der mit dem Gewichtungskoeffizient $w_r(i)$ assoziierte Freiheitsgrad ist, $\sigma_{r,i}$ die Standardabweichung dieser Gaußschen Funktion beim Empfang und t ein gegebener Zeitpunkt ist;

Berechnen des Integrals von $h_r(t)$, mit $f_r(t)$ notiert:

$$f_r(t) = \int_{-\infty}^{t} h_r(x) \, dx$$

dann die Funktion $S_0(t)$, ausgedrückt durch:

$$S_0(t) = \sin\left(\frac{\pi}{2} f_r(t)\right) \qquad 0 \le t \le L\,T$$
$$S_0(t) = \sin\left(\frac{\pi}{2}\left(1 - f_r(t - L\,T)\right)\right) \qquad L\,T \le t \le 2\,L\,T$$

und schließlich die Komponente des adaptierten Filters $C_0(t)$:

$$C_0(t) = \prod_{i=0}^{L-1} S_0(t + i\,T)$$

.

**9.** System nach Anspruch 7 oder 8, **dadurch gekennzeichnet, dass** es wenigstens ein Bandpassfilter umfasst, das beim Senden und/oder beim Empfangen eingeführt wird, wobei das wenigstens eine Filter so ausgelegt ist, dass es die Bandbreite des gesendeten Signals begrenzt und/oder den Empfang von frequenzverschobenen Interferenzen verhütet.

**Claims**

**1.** A method for the constant amplitude and continuous phase modulation of digital data and for the demodulation of said modulated signal, said data having the form of symbols that can assume a number M of states greater than 2, **characterised in that** it comprises in combination at least the following steps:

• recovering the symbols a(n) of digital data to be transmitted, which symbols have a constant time interval T;
• associating a frequency pulse, referenced $h_e(a(n))$, with each symbol a(n), which frequency pulse is of length L T, with L being an integer that is greater than or equal to 1, and the form of which explicitly is a function of the value of a(n);
• weighting the frequency pulse $h_e(a(n),t)$ by the total phase variation associated with a(n), said total phase variation having the form $\pi(2a(n) - (M-1))/M$, with a(n) = 0, 1, ..., M-1, and for a symbol of value m, with 0<=m<M, said function $h_e$ having a form that corresponds to a combination of 2 K + 1 elementary pulses:

$$h_e(m, t) = \sum_{i=1}^{K} w_e(m, i)\left(g(+a_{e,m,i}; \sigma_{e,m,i}; t) + g(m, -a_{e,m,i}; \sigma_{e,m,i}; t)\right)$$
$$+ \left(1 - 2\sum_{i=1}^{K} w_e(m, i)\right) g(0, \sigma_{e,m,0}; t)$$

where the function g is a continuous function, with a standard deviation $\sigma$ and optimised weighting coefficients w(i) corresponding to $w_e(m,i)$ and $\sigma_{e,m,i}$, respectively, $a_{e,m,i}$ is the symbol, as well as a number of its successive derivatives so as to limit the bandwidth of the emitted signal, and a is an integral that is equal to 1, with K being the degree of freedom associated with the weighting coefficient w(i);
• applying the sum of the successive weighted pulses to the input of a voltage-controlled oscillator (25) so as to generate the signal to be emitted;
• filtering (23) the received signal, upon reception, by means of a single pulse response filter $C_0(t)$, regardless of the number of states of the modulation;
• adjusting the parameters of the frequency pulse $h_e(a(n),t)$ and the pulse response of the filter $C_0(t)$ so as to minimise inter-symbols interference.

**2.** The method according to claim 1, **characterised in that** the function $g(a, \sigma, t)$ is a normalised Gaussian function with an average of a, around which point the function is centred, and with a standard deviation $\sigma$, with t being a given instant.

**3.** The method according to claim 1, **characterised in that** the function $g(a, \sigma, t)$ is a function with an adjustable width and position having a given number of degrees of continuity.

4. The method according to claim 1, where the pulse response reception filter Co(t) is constructed as follows: selecting a reception pulse $h_r(t)$ constructed according to the same method as the emission pulses $h_e(m,t)$, namely:

$$h_r(t) = \sum_{i=1}^{K} w_r(i) \left( g(+a_{r,i}, \sigma_{r,i}, t) + g(-a_{r,i}, \sigma_{r,i}, t) \right) + \left( 1 - 2 \sum_{i=1}^{K} w_r(i) \right) g(0, \sigma_{r,0}, t)$$

where the function g is a continuous function, with a standard deviation $\sigma$ and optimised weighting coefficients $w_r$(i), with $a_{r,i}$ being the symbol, as well as several of its successive derivatives so as to limit the bandwidth of the emitted signal, and a is an integral that is equal to 1, with K being the degree of freedom associated with the weighting coefficient $w_r(i)$, $\sigma_{r,i}$ being the standard deviation of said Gaussian function at reception, and t being a given instant; calculating the integral of $h_r(t)$, referenced $f_r(t)$:

$$f_r(t) = \int_{-\infty}^{t} h_r(x) \, dx$$

then the function $S_0(t)$ provided by:

$$\begin{aligned} S_0(t) &= \sin\left(\frac{\pi}{2} f_r(t)\right) & 0 \leq t \leq L\,T \\ S_0(t) &= \sin\left(\frac{\pi}{2} (1 - f_r(t - L\,T))\right) & L\,T \leq t \leq 2\,L\,T \end{aligned}$$

and finally the component of the matched filter $C_0(t)$:

$$C_0(t) = \prod_{i=0}^{L-1} S_0(t + i\,T)$$

.

5. The method according to claim 4, where the function $g(a, \sigma, t)$ is a normalised Gaussian function with an average of a and with a standard deviation $\sigma$.

6. The method according to claim 4, **characterised in that** the function $g(a, \sigma, t)$ is a function with an adjustable width and position having a given number of degrees of continuity.

7. A system for the constant amplitude and continuous phase modulation of digital data and for the demodulation of said modulated signal, said data having the form of symbols that can assume a number M of states greater than 2, **characterised in that** it comprises at least the following elements:

    • a sender comprising a bank of filters (23) having a transfer function that is determined by executing at least the following steps:
    • recovering the symbols a(n) of digital data to be transmitted, which symbols have a constant time interval T;

• associating a frequency pulse, referenced $h_e(a(n))$, with each symbol $a(n)$, which frequency pulse is of length L T, with L being an integer that is greater than or equal to 1, the form of which explicitly depends on the value of $a(n)$;

• weighting the frequency pulse $h_e(a(n),t)$ by the total phase variation associated with $a(n)$, said total phase variation having the form $\pi(2a(n) - (M-1))/M$, with $a(n) = 0, 1, ..., M-1$, and for a symbol of value m, with $0<=m<M$, said function $h_e$ having a form that corresponds to a combination of $2K + 1$ elementary pulses:

$$h_e(m, t) = \sum_{i=1}^{K} w_e(m, i) \left( g(+a_{e,m,i}, \sigma_{e,m,i}, t) + g(m, -a_{e,m,i}, \sigma_{e,m,i}, t) \right)$$
$$+ \left( 1 - 2 \sum_{i=1}^{K} w_e(m, i) \right) g(0, \sigma_{e,m,0}, t)$$

• where the function g is a continuous function, with a standard deviation $\sigma$ and optimised weighting coefficients $w(i)$ respectively corresponding to $w_e(m,i)$ and $\sigma_{e,m,i}$, $a_{e,m,i}$ is the symbol, as well as a number of its successive derivatives so as to limit the bandwidth of the emitted signal, and a is an integral that is equal to 1, with K being the degree of freedom associated with the weighting coefficient $w(i)$;

• an adder (24) adapted to execute said combination and to produce a sum of the successive weighted pulses;

• a voltage-controlled oscillator (25) adapted for using said sum as input so as to generate the signal to be emitted;

• a module (26) for emitting said signal to be emitted;

• a single filter (10) designed upon reception to filter the signal received by said filter, said filter being a pulse response filter $C_0(t)$, regardless of the number of states of the modulation, the parameters of the frequency pulses $h_e(a(n), t)$ and $C_0(t)$ being adjusted so as to minimise inter-symbols interference.

8. The system according to claim 7, **characterised in that** it comprises a pulse response reception filter $C_0(t)$ that is constructed as follows:

selecting a reception pulse $h_r(t)$ constructed according to the same method as the emission pulses $h_e(m,t)$, namely:

$$h_r(t) = \sum_{i=1}^{K} w_r(i) \left( g(+a_{r,i}, \sigma_{r,i}, t) + g(-a_{r,i}, \sigma_{r,i}, t) \right)$$
$$+ \left( 1 - 2 \sum_{i=1}^{K} w_r(i) \right) g(0, \sigma_{r,0}, t)$$

where the function g is a continuous function, with a standard deviation $\sigma$ and optimised weighting coefficients $w_r(i)$, $a_{r,i}$ is the symbol, as well as a number of its successive derivatives so as to limit the bandwidth of the emitted signal, and a is an integral that is equal to 1, with K being the degree of freedom associated with the weighting coefficient $w_r(i)$, $\sigma_{r,i}$ being the standard deviation of said Gaussian function at reception and t being a given instant; calculating the integral of $h_r(t)$, referenced $f_r(t)$:

$$f_r(t) = \int_{-\infty}^{t} h_r(x) \, dx$$

then the function $S_0(t)$ provided by:

$$S_0(t) = \sin\left(\frac{\pi}{2} f_r(t)\right) \qquad 0 \le t \le L T$$
$$S_0(t) = \sin\left(\frac{\pi}{2} (1 - f_r(t - L T))\right) \quad L T \le t \le 2 L T$$

and finally the component of the matched filter $C_0(t)$:

$$C_0(t) = \prod_{i=0}^{L-1} S_0(t + i\,T)$$

.

9. The system according to claim 7 or 8, **characterised in that** it comprises at least one band-pass filter inserted on emission and/or on reception, with the at least one filter being designed to limit the bandwidth of the emitted signal and/or to prevent the reception of frequency-shifted interference.

Longueur de la réponse
impulsionnelle : L T

FIG.1

FIG.2

FIG.3

Constellation finale

FIG.4a

Constellation finale

FIG.4b

23

FIG.5

Impulsions de fréquence

FIG.6a

GMSK2MatchedFilter

FIG.6b

Signal émis

FIG.6c

Signal émis

FIG.6d

Sortie filtre adapté

FIG.7a

Sortie filtre adapté

FIG.7b

Sortie filtre adapté

FIG.7c

Sortie filtre adapté

FIG.7d

FIG.8

FIG.9

## RÉFÉRENCES CITÉES DANS LA DESCRIPTION

**Documents brevets cités dans la description**

- US 2005286653 A

**Littérature non-brevet citée dans la description**

- **PIERRE.A. LAURENT.** Exact and Approximate Construction of Digital Phase Modulations by Superposition of Amplitude Modulated Pulses (AMP. *IEEE Transactions on Communications,* Février 1986, vol. COM-34 (2), 150-160